# EUROPÄISCHE PATENTSCHRIFT

(11) **EP 1 277 029 B1**
(45) Veröffentlichungstag und Bekanntmachung des Hinweises auf die Patenterteilung: **04.10.2006**
(21) Anmeldenummer: 01940173.6
(22) Anmeldetag: 19.04.2001
(51) Int. Cl.: G01C 21/34

(54) **VERFAHREN ZUR ROUTENBERECHNUNG UND VERFAHREN ZUR ZIELFÜHRUNG**
ROUTE CALCULATION METHOD AND NAVIGATION METHOD
PROCEDE DE CALCUL DE ROUTE ET PROCEDE DE CONDUITE A LA DESTINATION

(30) Priorität: 19.04.2000 DE 10019407
(43) Veröffentlichungstag der Anmeldung: 22.01.2003
(73) Patentinhaber: ROBERT BOSCH GMBH, 70442 Stuttgart (DE)
(72) Erfinder: LAU, Stefan, 07458 Upper Saddle River Nj (US); JUNG, Thomas, 60314 Frankfurt (DE); SCHMIDT, Heinrich, 31199 Diekholzen (DE); HOFFMANN, Ralf, 31137 Hildesheim (DE); SCHIER, Achim, 31141 Hildesheim (DE)
(86) Internationale Anmeldenummer: PCT/DE2001/001505
(87) Internationale Veröffentlichungsnummer: WO 2001/079786

(56) Entgegenhaltungen:
- DE-A- 19 839 193
- PATENT ABSTRACTS OF JAPAN vol. 1999, no. 09, 30. Juli 1999 (1999-07-30) & JP 11 094576 A (TOYOTA MOTOR CORP), 9. April 1999 (1999-04-09)
- PATENT ABSTRACTS OF JAPAN vol. 1998, no. 09, 31. Juli 1998 (1998-07-31) & JP 10 089992 A (MAZDA MOTOR CORP), 10. April 1998 (1998-04-10)
- PATENT ABSTRACTS OF JAPAN vol. 2000, no. 05, 14. September 2000 (2000-09-14) & JP 2000 046573 A (SANYO ELECTRIC CO LTD), 18. Februar 2000 (2000-02-18)

## Beschreibung

### Stand der Technik

Die Erfindung geht von einem Verfahren zur Routenberechnung in einem Fahrzeugnavigationsgerät, bei dem eine Route von einem Start- oder aktuellen Standort zu einem Zielort berechnet wird, sowie einem Verfahren zur Zielführung eines Fahrzeugführers nach der Gattung der unabhängigen Patentansprüche aus.

Es sind Navigationsgeräte insbesondere zur Verwendung in Kraftfahrzeugen bekannt, die nach Eingabe eines Navigationsziels eine Fahrtroute von einem Startort oder einem aktuellen Fahrzeugstandort zum Navigationsziel unter Zuhilfenahme von gespeicherten Karteninformationen berechnen und einen Fahrzeugführer während einer Fahrt mittels in Abhängigkeit des jeweils aktuellen Fahrzeugstandorts erzeugten Fahranweisungen zum Navigationsziel führen.

Patent Abstract of Japan zu JP-A-11 094 576 offenbart ein Verfahren sowohl zur Routenberechnung als auch zur Fahrzielführung, bei welchem im Falle eines Fahrzeugmangels eine Fahrroute zu einem Ersatzzielort anstelle des ursprünglichen Zielorts berechnet wird.

Ein solches Verfahren zur Routenberechnung zu einem Ersatzzielort im Falle eines Fahrzeugmangels ist auch aus DE-A-198 39 193 bekannt.

### Vorteile der Erfindung

Die erfindungsgemäßen Verfahren mit den Merkmalen der unabhängigen Patentansprüche, die sich dadurch auszeichnen, daß im Falle eines Fahrzeugmangels oder eines den Fahrzeugführer beeinträchtigenden Mangels eine einer Fahrzielführung zugrundegelegte Route zu einem Ersatzzielort anstelle des Zielorts berechnet wird, haben demgegenüber den Vorteil, daß der Fahrzeugführer von einer manuellen Suche nach Ersatzzielorten, vorzugsweise mit einer zur Beseitigung des Mangels geeigneten Ausstattung, beispielsweise anhand einer mitgeführten Straßenkarte, entlastet wird. Dies ist insbesondere deshalb von Bedeutung, als auf üblichen Straßenkarten Ersatzziele im Sinne der Erfindung, also beispielsweise Park- und Autobahnrastplätze, insbesondere die an diesen Ersatzzielen verfügbare Ausstattung, weiter beispielsweise Übernachtungsmöglichkeiten, Restaurants usw. entweder nicht vermerkt sind, oder nur durch konzentiertes Studium der Karte zu ermitteln sind. Die Erfindung bedingt somit eine verminderte Ablenkung des Fahrzeugführers vom Straßenverkehr und damit eine Erhöhung der Verkehrssicherheit. Weiterhin wird das Mitführen einer separaten Karte entbehrlich.

Dabei sieht die Erfindung eine Möglichkeit zur Einflußnahme des Fahrzeugführers auf die Auswahl eines Ersatzzielorts für die Routenberechnung und Zielführung vor. Dadurch wird eine Bevormundung des Fahrzeugführers vermieden, die den Fahrzeugführer dazu verleiten könnte, die Fahranweisungen des Navigationsgeräts vermehrt zu ignorieren. Somit wird durch diese Maßnahme die Akzeptanz des Navigationsgeräts durch den Fahrzeugführer erhöht. Diese Möglichkeit der Einflußnahme besteht vorteilhaft darin, dass die Route zu dem ausgewählten Ersatzzielort anstelle des Zielorts berechnet wird, sofern nicht der Fahrzeugführer den Ersatzzielort ablehnt.

Eine vorteilhafte Ausführungsform der Erfindung sieht vor, daß der Fahrzeugführer für den Fall einer möglichen Inanspruchnahme eines Ersatzzielorts und der dort verfügbaren Ausstattung infolge eines Fahrzeugmangels oder einer ihn selbst betreffenden Beeinträchtigung für die Auswahl eines Ersatzzielorts bestimmte Attribute, wie eine bestimmte Zusatzausstattung, Markenzugehörigkeit oder ähnliches, vorgeben kann. So kann beispielsweise eine für eine Fahrzeugbetankung notwendige Fahrtunterbrechung vorteilhafterweise zur Verpflegung des Fahrzeugführers genutzt werden. Es kann damit die Anzahl notwendiger Fahrtunterbrechungen verringert werden.

Darüber hinaus steht gemäß einer vorteilhaften Ausführungsform der Erfindung auch nach Annahme des Ersatzziels nach dessen Ansteuerung das ursprüngliche Fahrziel als Zielort zur Verfügung. Somit wird der Fahrzeugführer von einer weiteren Zieleingabe entlastet.

Besonders vorteilhaft ist es, wenn dem Fahrzeugführer darüber hinaus der festgestellte Mangel mitgeteilt wird, so daß der Fahrzeugführer zum einen über den Auslöser für die Zielführung zum Ersatzzielort informiert ist, zum anderen nach Ankunft am Ersatzzielort unverzüglich die zur Behebung des festgestellten Mangels geeigneten Maßnahmen veranlassen oder durchführen kann.

Die Feststellung eines Fahrzeugmangels erfolgt vorteilhafterweise durch Fahrzeugsensoren, die ohnehin üblicherweise zur Erzeugung von Warnsignalen für den Fall eines Mangels, wie eines zur Neige gehenden Betriebsstoffvorrats, eines drohenden Motorschadens wegen Überhitzung u. ä., vorhanden sind. Die Feststellung eines den Fahrzeugführer beeinträchtigenden Mangels erfolgt vorteilhaft durch Biosensoren oder durch eine entsprechende Eingabe des Fahrzeugführers über die Eingabeeinheit des Navigationsgeräts.

Weiter ist es von besonderem Vorteil, wenn die Verfügbarkeit der zur Behebung des Fahrzeugmangels oder des den Fahrzeugführer beeinträchtigenden Mangels erforderlichen Ausstattung an einem potentiellen Ersatzzielort durch Vergleich einer aktuellen Uhrzeit mit gespeicherten Öffnungszeiten oder durch Fernabfrage überprüft wird. So kann die Verfügbarkeit der Ressourcen von einer aktuellen Uhrzeit oder beispielsweise einem am potentiellen Ersatzzielort vorhandenen Bestand an Ersatzteilen oder Betriebsstoffen abhängen. Die Überprüfung der Verfügbarkeit der Ressourcen erfolgt zur Entlastung des Fahrzeugführers vorteilhaft automatisch, insbesondere kann auch die Fernabfrage über eine Funkschnittstelle unter Rückgriff auf gespeicherte Telefonnummern oder sonstige gespeicherte Adressen automatisch initiiert werden.

### Zeichnungen

Ausführungsbeispiele der Erfindung sind in den Zeichnungen dargestellt und werden nachfolgend näher erläutert.

Es zeigen
Figur 1 ein Blockschaltbild des erfindungswesentlichen Teils eines Navigationsgerät zur Durchführung der erfindungsgemäßen Verfahren und
Figur 2 ein Ablaufdiagramm der erfindungsgemäßen Verfahren.

### Beschreibung der Ausführungsbeispiele

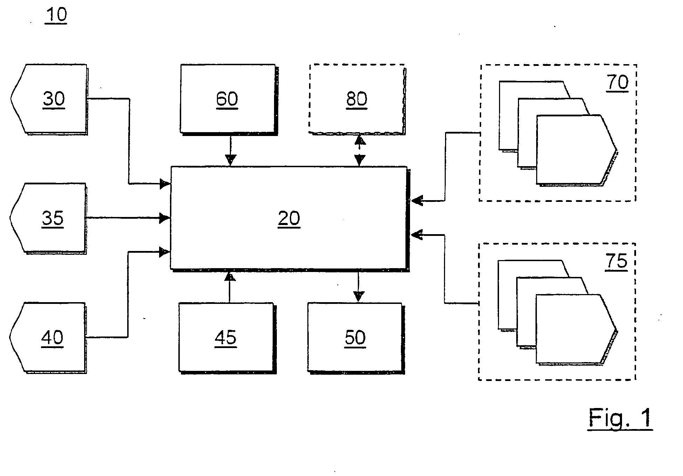

Figur 1 zeigt ein Blockschaltbild eines Navigationsgeräts 10 zur Durchführung des erfindungsgemäßen Verfahrens.

An eine Gerätesteuerung 20 des Navigationsgeräts 10, die unter anderem auch den eigentlichen Navigationsrechner umfaßt, sind zum einen Mittel 30, 35, 40 angeschlossen, die Informationen über den Standort, die Bewegungsrichtung und den Bewegungszustand des Fahrzeugs abgeben.

Beim vorliegenden Ausführungsbeispiel handelt es sich dabei um einen Drehratensensor 30, mit dessen Hilfe durch Integration über die erfaßten Drehratenänderungen die Orientierung des Fahrzeugs, in dem das Navigationsgerät installiert ist, bezüglich der Himmelsrichtungen erfaßt wird. Weiter handelt es sich dabei um einen Wegstreckenmesser 35, der beispielsweise von Radsensoren eines Antiblockiersystems für Fahrzeugbremsen abgegebene Impulse erfaßt und aus der festgestellten Impulszahl und einem bekannten Radumfang eine zurückgelegte Fahrtstrecke ermittelt. Schließlich handelt es sich dabei um einen GPS-(Global Positioning System-) Empfänger 40 zum Empfang und zur Auswertung von von GPS-Satelliten ausgestrahlten Funksignalen, anhand derer die Position des Fahrzeugs feststellbar ist.

Weiterhin ist an die Steuerung 20 ein Speicher 60 angeschlossen, in dem Informationen einer Land- bzw. Straßenkarte in digitaler Form gespeichert sind. Beim vorliegenden Ausführungsbeispiel ist der Speicher 60 in Form eines CD-ROM-Laufwerks mit eingelegter CD-ROM als Datenträger für die Landkarteninformationen realisiert. Ebenso kann es jedoch auch vorgesehen sein, daß der Speicher 60 in Form eines RAM- bzw. ROM-Halbleiterspeichers realisiert ist. Im Zusammenhang mit der vorliegenden Erfindung ist es wesentlich, daß im Speicher nicht nur die reinen Verkehrswegeinformationen, wie Autobahnen, Bundes- und Land- und Kreisstraßen und innerstädtische Straßen, sondern daneben auch Informationen über Tankstellen, Werkstätten und Rastplätze, Ausstattung beispielsweise mit sanitären Anlagen, Restaurants, Fernsprechapparaten und Tankstellen, abgelegt sind. Im Falle von Werkstätten und Tankstellen können darüber hinaus auch Informationen über ihre Markenzugehörigkeit bzw. darüber, ob es sich um Vertragswerksätten bestimmter Fahrzeugmarken handelt, abgespeichert sein. Weiter sind im Zusammenhang mit nur in einer bestimmten Richtung befahrbarer Straßen, wie Einbahnstraßen und Autobahnen zusammen mit den Rastplatzinformationen auch Richtungsinformationen abgelegt, die angeben, ob beispielsweise ein bestimmten Autobahnrastplatz bei einer vorgegebenen Fahrtrichtung auf einer bestimmten Autobahn überhaupt erreichbar ist. Schließlich sind gemäß einer besonders vorteilhaften Ausgestaltung der Erfindung im Speicher 60 Informationen über Öffnungszeiten bestimmter an einem bestimmten Ort verfügbarer Ressourcen und/oder Adressen, wie z. B. Telefonnummern, zu deren Kontaktierung beispielsweise über ein Mobilfunktelefon oder einen mobilen Internetzugang abgelegt.

Weiterhin ist an die Steuerung 20 eine Ausgabeeinheit 50 angeschlossen, bei der es sich im vorliegenden Fall um eine Anzeigevorrichtung handelt. Auf dieser werden während des eigentlichen Navigationsvorganges Fahranweisungen für den Fahrzeugführer, beispielsweise in Form eines Richtungspfeiles bei bevorstehenden Abbiegevorgängen und einer Restentfernungsanzeige bis zum Abbiegevorgang, dargestellt. Ebenso ist es jedoch auch möglich, daß ergänzend oder alternativ zur optischen Anzeige die Ausgabeeinheit 50 eine akustische Ausgabevorrichtung umfaßt, über die akustische Fahrtanweisungen, wie z. B. ,nach 100 Metern rechts abbiegen oder ähnliches, ausgegeben werden.

Weiter ist an die Steuerung 20 eine Eingabeeinheit 45 mit nicht dargestellten Bedienelementen, wie Drucktasten oder anderen Eingabemitteln, wie z. B. Drehknöpfen, zur Eingabe eines Navigations-Zielpunktes sowie zur Bedienung weiterer Funktionen des Geräts angeschlossen. Die Eingabeeinheit 45 dient ferner, wie später beschrieben, der Vorgabe benutzerdefinierter Präferenzen für die Auswahl von Ersatzzielen, wie beispielsweise der Vorgabe bevorzugter Mineralölgesellschaften für den Fall, daß aufgrund eines zur Neige gehenden Betriebsstoffvorrats vor Fahrtende eine Tankstelle angesteuert werden muß, oder beispielsweise der Vorgabe einer bestimmten Ausstattung eines Autobahnrastplatzes, zum Beispiel mit Restaurant, so daß im Falle einer beispielsweise zur Aufüllung eines Betriebsstoffvorrats notwendigen Fahrtunterbrechung diese gleichzeitig zur Verpflegung genutzt werden kann.

Schließlich sind an die Steuerung 20 Fahrzeugsensoren 70 zur Erfassung von Betriebszuständen des Fahrzeugs, insbesondere zur Erkennung eines Fahrzeugmangels, und Biosensoren 75 zur Erfassung eines den Fahrzeugführer beeinträchtigenden Mangels angeschlossen. Die Fahrzeugsensoren 70 bestehen beispielsweise in einem Fühler für Betriebsstoffvorräte, wie einem Füllstandsmesser für einen Brennstoffvorratstank im Falle eines mittels einer Brennkraftmaschine angetriebenen Fahrzeugs, einem Fühler für einen Schmierstoffvorrat und einem Fühler für einen Kühlmittelvorrat, weiterhin beispielsweise in einem Reifendruckfühler. Die genannten Fahrzeugsensoren 70 können dabei derart ausgeführt sein, daß sie eine dem gemessenen Parameter wie der Betriebsstoffvorratsmenge oder dem Reifendruck entsprechende Meßgröße abgeben, die in der Steuerung 20 mit einem Schwellwert, wie beispielsweise einer Betriebsstoffvorratsmindestreserve oder einem Reifenmindestdruck, zur Bildung eines einen Fahrzeugmangel anzeigenden Signals verglichen werden. Die Signale der Fahrzeugsensoren 70 werden dabei vorzugsweise in regelmäßigen Abständen zur Prüfung der zu überwachenden Parameter durch die Steuerung 20 abgefragt, so daß ein sich allmählich einstellender Fahrzeugmangel, wie beispielsweise ein zur Neige gehender Betriebsstoffvorrat, frühzeitig erkannt und für eine Ersatzzielortbestimmung berücksichtigt werden kann. Bei einer alternativen Ausführungsform können bestimmte Sensorsignale durch die Steuerung 20 auch dann abgerufen werden, wenn aufgrund bestimmter Umstände, beispielsweise einer nach der letzten Betankung des Fahrzeugs zurückgelegten Fahrtstrecke, die Entstehung eines Mangels, wie beispielsweise das Zurneigegehen eines Betriebsstoffvorrats, zu erwarten ist.

Alternativ können die Fahrzeugsensoren 70 die Auswertung der Meßgrößen beinhalten und im Falle eines Fahrzeugmangels ein den Mangel anzeigendes Signal an die Steuerung abgeben. Die Biosensoren 75 bestehen beispielsweise in einem Pulsmesser, einem Hautoberflächenwiderstandsmesser oder einem anderen zur Erfassung der physischen Verfassung des Fahrzeugführers geeigneten Sensor. Die Biosensoren 75 dienen der Erzeugung eines eine Beeinträchtigung des Fahrzeugführers, wie beispielsweise eine Übermüdung oder eine übermäßigen Streßbelastung des Fahrzeugführers, anzeigenden Signals.

Gemäß einer vorteilhaften Weiterbildung der Erfindung kann an die Steuerung 20 eine Funkschnittstelle 80, vorzugsweise in Form eines Mobilfunktelefons oder eines Funkgeräts, angeschlossen sein.

Die Steuerung 20 ist vorzugsweise in Form eines programmgesteuerten Mikroprozessors zur Durchführung der im Rahmen einer Routenberechnung in einem Fahrzeugnavigationsgerät und/oder zur Fahrzielführung durch ein Fahrzeugnavigationsgerät erforderlichen Abläufe und Berechnungen ausgeführt. Insbesondere führt die Steuerung die Abläufe
- Einlesen eines durch den Fahrzeugführer mittels der Eingabeeinheit 45 vorgegebenen Zielortnamens, daneben Steuerung der Zielorteingabe, beispielsweise durch eine Plausibilitätsprüfung eines eingegebenen Ortsnamens oder Ortsnamensbestandteils durch Vergleich mit im Speicher 60 enthaltenen Ortsnamen,
- Zuordnung von Ortskoordinaten zu dem vorgegebenen Zielort aufgrund der im Speicher 60 abgelegten Kartendaten,
- Bestimmung des aktuellen Fahrzeugstandorts aus den durch den Drehratensensor, den Wegstreckenmesser und den GPS-Empfänger zugeführten Positions- oder zu Berechnung der Position geeigneten Daten,
- Berechnung einer Fahrtroute vom aktuellen Fahrzeugstandort zum durch den Benutzer oder auch anderweitig vorgegebenen Zielort auf Grundlage der im Speicher 60 abgelegten Kartendaten,
- Vergleich der aktuellen Fahrzeugposition mit auf der berechneten Route liegenden markanten Punkten, insbesondere Abbiegepunkten,
- Erzeugung von Fahranweisungen zur Zielführung des Fahrzeugführers bei Erreichen auf der Route liegender markanter Punkte
- Vergleich der aktuellen Fahrzeugposition mit der berechneten Fahrtroute zur Feststellung einer eventuellen Abweichung der Fahrzeugposition von der Fahrtroute infolge eines Nichtbefolgens einer Fahranweisung oder eines nicht vorgesehenen Abbiegevorgangs und erforderlichenfalls
- Neuberechnung der Fahrtroute
aus.

Im Zusammenhang mit der vorliegenden Erfindung erfüllt die Steuerung 20 darüber hinaus insbesondere die Funktionen
- Einlesen von über die Eingabeeinheit 45 eingegebenen Präferenzen, für ein im Falle eines festgestellten Fahrzeugmangels oder einer Beeinträchtigung des Fahrzeugführers anstelle des eingegebenen Fahrziels anzusteuerndes Ersatzziel,
- vorzugsweise regelmäßige Abfrage der Sensorsignale zur vorausschauenden Festestellung eines sich allmählich einstellenden Fahrzeugmangels,
- Feststellung eines Fahrzeugmangels aufgrund der durch die Fahrzeugsensoren 70 und/oder die Biosensoren 75 erzeugten Signale und Informieren des Fahrzeugführers über den festgestellten Mangel,
- Bestimmung eines zur Behebung eines festgestellten Mangels geeigneten Ersatzziels, gegebenenfalls unter Berücksichtigung der durch den Fahrzeugführer vorgegebenen Präferenzen, und, soweit ein über die bevorzugten Eigenschaften verfügendes Ersatzziel nicht oder nicht innerhalb einer vorgegebenen Zeit oder Fahrtstrecke erreichbar ist, Ermittlung eines alternativen Ersatzziels,
- Ermittlung der Verfügbarkeit des Ersatzziels oder der zur Behebung des festgestellten Mangels erforderlichen Ressourcen des Ersatzziels, beispielsweise durch Vergleich einer aktuellen Uhrzeit mit beispielsweise im Speicher 60 abgelegten Öffnungszeiten bestimmter Ressourcen, oder durch Fernabfrage der Verfügbarkeit der Ressourcen über die Funkschnittstelle,
- Berechnung einer Fahrtroute vom aktuellen Fahrzeugstandort zum Ersatzziel, sofern dieses vom Fahrzeugführer akzeptiert wurde oder ein Anfahren des angebotenen Ersatzziels aufgrund des vorliegenden Mangels unabdingbar ist,
- Zielführung zum Ersatzziel und
- Zielführung zum durch den Fahrzeugführer vorgegebenen Zielort, sobald der festgestellte Mangel beseitigt ist.

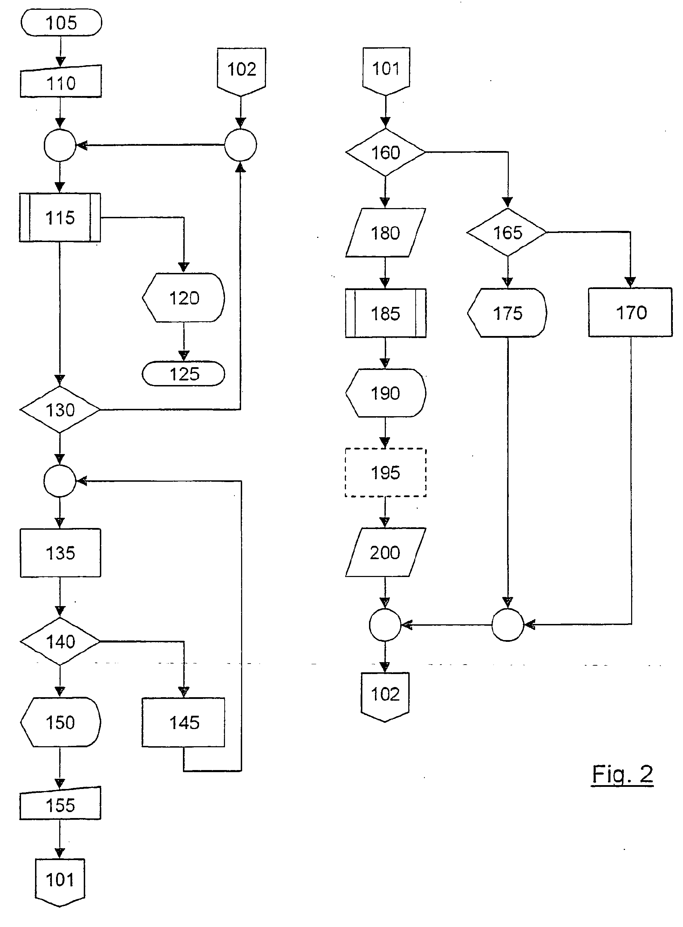

Die erfindungsgemäßen Verfahren zur Routenberechnung und zur Fahrzielführung werden nachfolgend anhand des in Figur 2 dargestellten Ablaufdiagramms erläutert.

Der erfindungsgemäße Ablauf beginnt mit dem Einschalten des Navigationsgeräts 10, beispielsweise mit dem Einschalten der Fahrzeugzündung (Schritt 105). Nach Einschalten des Navigationsgeräts 10 wird der Fahrzeugführer zur Eingabe eines Navigationsziels aufgefordert. Die Zielorteingabe (Schritt 110) erfolgt in an sich bekannter Weise durch Eingabe des Orts- oder Städtenames des Navigationsziels an der Eingabeeinheit 45, beispielsweise durch aufeinanderfolgende Eingabe der Buchstaben des Zielortnamens durch Blättern im Alphabet, beispielsweise mittels einer Wipptaste bzw. Tastenwippe oder eines Drehknopfes, und Bestätigung eines jeden ausgewählten Buchstabens und durch anschließende analoge Eingabe eines Straßennamnes und gegebenenfalls einer Hausnummer des Navigationsziels.

Die Zielorteingabe kann beispielsweise durch die Steuerung 20 in Form eines sogenannten ausgedünnten Spellers unterstützt werden, so daß für die Buchstabeneingabe jeweils nur die Buchstaben zur Verfügung stehen, die in Verbindung mit zuvor eingegebenen Buchstaben einen Bestandteil eines im Speicher enthaltenen gültigen Orts- oder Straßennamens ergeben. Weiter kann zu einer eingegebenen Buchstabenfolge ein oder eine Mehrzahl dazu passender Ortsnamen in einer Liste zur Auswahl angeboten werden.

Sofern durch den Fahrzeugführer gewünscht, können außerdem mittels der Eingabeeinheit 45 Präferenzen für ein oder mängelabhängig mehrere anzusteuernde Ersatzziele, die über eine zur Behebung der Mängel geeignete Ausstattung verfügen, vorgegeben werden. Beispielsweise kann für den Fall eines erforderlichen Werkstattaufenthalts eine bestimmte Fahrzeugmarke, für den Fall einer notwendigen Fahrzeugbetankung eine bestimmte Mineralölgesellschaft, oder auch eine bestimmte Ausstattung eines Autobahnrastplatzes, beispielsweise mit einem Restaurant zur Nutzung einer für eine Fahrzeugbetankung notwendigen Fahrtunterbrechung zur Verpflegung, vorgegeben werden. Diese Aufzählung ist nicht abschließend, sondern lediglich als beispielhaft zu verstehen, weitere vorgebbare Merkmale für Ersatzziele sind vorstellbar und liegen im Bereich der vorliegenden Erfindung.

Anschließend wird aufgrund der durch die Sensoren 30, 35, 40, nämlich den Drehratensensor 30, den Wegstreckenmesser 35 und den GPS-Empfänger 40 zur Verfügung gestellten Informationen über den Bewegungszustand, die Ausrichtung und die aktuelle Position des Fahrzeugs, der aktuelle Fahrzeugstandort bestimmt (Schritt 115). Weiterhin wird eine Fahrtroute ausgehend von der aktuellen Fahrzeugposition zum durch den Fahrzeugführer vorgegebenen Zielort unter Zuhilfenahme der im Speicher 60 abgelegten Karteninformationen bestimmt. Schließlich erfolgt die Fahrzielführung durch über die Ausgabeeinheit 50 ausgegebene Fahranweisungen aufgrund eines Vergleichs der jeweils aktuellen Fahrzeugposition mit der berechneten Fahrtroute zur Führung des Fahrzeugführers entlang der Fahrtroute.
Verläßt das Fahrzeug die berechnete Fahrtroute, erfolgt in bekannter Weise eine Neuberechnung der Fahrtroute vom dann aktuellen Fahrzeugstandort zum durch den Fahrzeugführer vorgegebenen Zielort und eine entsprechende Fahrzielführung.

Wird hierbei das vorgegebene Fahrziel erreicht, erfolgt eine entsprechende Ausgabe an den Fahrzeugführer (Schritt 120) und das erfindungsgemäße Verfahren endet (Schritt 125).

Während der Fahrzielführung werden die Signale der Fahrzeugsensoren 70 und der Biosensoren 75 fortwährend überwacht. Wird kein Mangel festgestellt (Schritt 130), so erfolgt weiterhin die Fahrzielführung (Schritt 115) in beschriebener Weise.

Wird hingegen in Schritt 130 aufgrund der Signale der Fahrzeugsensoren 70 ein Fahrzeugmangel, beispielsweise
- das Unterschreiten eines Betriebsstoffmindestvorrats, wobei unter Betriebsstoff beispielsweise ein Kraftstoff für eine Brennkraftmaschine als Fahrzeugantrieb, ein Schmiermittel, wie ein für die Brennkraftmaschine erforderliches Schmieröl oder ein Kühlmittel zur Abfuhr der beim Betrieb der Brennkraftmaschine entstehenden Abwärme verstanden werden kann,
- das Unterschreiten eines vorgeschriebenen Mindestreifendrucks, oder
- ein akuter oder schleichender Schaden an einem der betriebsnotwendigen oder einem sonstigen Aggregat oder Baugruppe des Fahrzeugs
oder aufgrund der Biosensoren 75 ein den Fahrzeugführer beeinträchtigender Mangel, insbesondere eine gesundheitliche Beeinträchtigung des Fahrzeugfühers selbst, wie beispielsweise
- eine zunehmende Erschöpfung oder Ermüdung des Fahrzeugführers,
- eine übermäßige Streßbelastung oder sonstige Überlastung des Fahrzeugführers,
oder durch den Fahrer selbst eine Beeinträchtigung des Fahrzeugführers, die der Fahrzeugführer dem Navigationsgerät über die Betätigung einer entsprechenden Taste an der Bedieneinheit 45 mitteilt, wie beispeilsweise
- ein Bedürfnis nach Nahrungs- oder Flüssigkeitsaufnahme
- ein Bedürfnis nach Bewegung und/oder
- ein Stuhl- oder Harndrang des Fahrzeugführers
festgestellt, geht der Ablauf zu Schritt 135 über.

Dort (Schritt 135) wird aus den im Speicher 60 abgelegten Karteninformationen ein Ersatzziel ermittelt, das über die zur Beseitigung des festgestellten Mangels erforderliche Ausstattung verfügt und möglichst weitgehend den durch den Fahrzeugführer vorgegebenen Präferenzen entspricht. Weiterhin wird gemäß einer bevorzugten Ausgestaltung der Erfindung die Verfügbarkeit der zur Behebung des Mangels erforderlichen Ressourcen, beispielsweise durch Vergleich der aktuellen Uhrzeit mit im Speicher 60 abgelegten Öffnungszeiten einer Tankstelle oder eines Restaurants, oder durch Fernabfrage der Verfügbarkeit der Ressourcen am Ersatzziel über die Funkschnittstelle 80, überprüft.

Ist ein solches Ersatzziel nicht verfügbar (Schritt 140), wird das Suchkriterium für eine erneute Suche eines geeigneten Ersatzziels (Schritt 135) erweitert, es werden also beispielsweise die Präferenzen des Fahrzeugführers schrittweise bei einer erneuten Suche vernachlässigt.

Beispielsweise werden im Falle des Erfordernisses einer Fahrzeugbetankung zunächst die Vorgabe einer bestimmten Mineralölgesellschaft, sofern dann immer noch kein geeignetes Ersatzziel auffindbar ist, zusätzlich das Ausstattungsmerkmal Restaurant usw. bei der Ersatzzielsuche vernachlässigt.

Ist schließlich mindestens ein Ersatzziel ermittelt worden, wird dem Fahrzeugführer das in Schritt 135 ermittelte Ersatzziel, oder für den Fall, daß mehrere geeignete Ersatzziele gefunden wurden, die gleichermaßen den vorgegebenen Präferenzen entsprechen oder nicht entsprechen, eine Liste der gefundenen Ersatzziele mittels der Ausgabeeineheit 50 mitgeteilt (Schritt 150). Alternativ kann auch vorgesehen sein, daß eine Mehrzahl ermittelter Ersatzziele nach dem Grad der Erfüllung der vorgegebenen Präferenzen sortiert in einer Liste ausgegeben werden.

Ist der vorliegende Mangel durch einen der Fahrzeug- oder Biosensoren 70, 75 festgestellt worden, wird darüber hinaus der Fahrzeugführer vorzugsweise auf das Vorliegen dieses Mangels hingewiesen. Dieser Hinweis kann entweder Zusammen mit der Ausgabe des oder der ermittelten Ersatzzielorte (Schritt 150) oder unmittelbar nach Feststellung des Mangels erfolgen. Dadurch wird eine Verwirrung des Fahrzeugführers durch eine Zielführung zu einem von dem von ihm vorgegebenen Fahrziel abweichenden Ersatzziel vermieden.

Aus der Anzahl der ermittelten Ersatzziele kann der Fahrzeugführer das ihm am passendsten oder angenehmsten erscheinende Ersatzziel über die Bedieneinheit 45 auswählen (Schritt 155) oder das eine ermittelte Ersatzfahrziel annehmen. Hierzu wird das ermittelte Ersatzziel oder werden die ermittelten Ersatzziele vorzugsweise für eine vorgegebene Zeitdauer von beispielsweise einer Minute angeboten, während der der Fahrzeugführer eine Eingabe an der Bedieneinheit 45 zur Auswahl des Ersatzziels oder eines aus der Mehrzahl der angebotenen Ersatzziele tätigen kann.

Anschließend (Schritt 160; wird im Ablaufdiagramm über die Sprungstelle 101 erreicht) wird überprüft, ob der Fahrzeugführer das angebotene Ersatzziel angenommen oder aus der Liste der Ersatzziele eines ausgewählt hat. Ist dies nicht der Fall, geht der Ablauf zu Schritt 165 über, wo geprüft wird, ob es sich bei dem festgestellten Mangel um einen gravierenden Mangel handelt, der einer Fortsetzung der Fahrt zwingend entgegensteht. Ein solcher Mangel kann beispielsweise eine Reifenpanne, ein Motorschaden, das Unterschreiten einer für die Funktion der das Fahrzeug antreibenden Brennkraftmaschine zwingend erforderlichen Mindestmenge an Kühl- oder Schmiermittel oder das Zurneigegehen eines Kraftstoffvorrats unter einen Wert, der ein Erreichen eines weiter entlegenen Ziels oder Ersatzziels ermöglichen würde, oder auch ein Einschlafen des Fahrzeugführers sein. Handelt es sich bei dem festgestellten Mangel um einen solchen gravierenden Mangel, erfolgt eine entsprechende Benachrichtigung des Fahrzeugführers (Schritt 175), und der Ablauf wird mit der beschriebenen Standortbestimmung, Routenberechnung und Zielführung bei gleichzeitiger Überwachung der Sensoren 70 und 75 fortgesetzt (Schritt 115; über Sprungstelle 102). Dies hat zur Folge, daß der durch den Fahrzeugführer ignorierte Mangel in Schritt 130 erneut detektiert wird, so daß erneut ein oder mehrere Ersatzziele vorgeschlagen werden.

Nachdem in Schritt 165 das Vorliegen eines gravierenden Mangels festgestellt wurde, kann gemäß einer vorteilhaften Ausführungsform der Erfindung vorgesehen sein, daß ein angebotenes Ersatzziel (Schritt 150) oder aus einer Menge von angebotenen Ersatzzielen dasjenige mit der höchsten Übereinstimmung mit vorgegebenen Nutzerpräferenzen oder im Falle mehrerer Ersatzziele mit gleicher Übereinstimmung mit vorgegebenen Nutzerpräferenzen das dem Fahrzeugstandort nächstgelegene ohne eine Möglichkeit der Einflußnahme für den Fahrzeugführer (Schritt 155) automatisch ausgewählt wird.

Ebenso kann gemäß einer vorteilhaften Ausführungsform der Erfindung sowohl in dieser Situation, als auch bei einem erstmaligen Angebot eines Ersatzziels oder mehrerer Ersatziele auch vorgesehen sein, daß das angebotene Ersatzziel oder ein bevorzugtes aus der Liste der angebotenen Ersatzziele im Falle einer fehlenden Bestätigung oder Auswahl des Fahrzeugführers nach Ablauf der in Schritt 155 vorgesehenen vorgegebenen Zeitdauer automatisch angenommen oder ausgewählt wird. Der Fahrzeugführer hat dann die Möglichkeit, ein angebotenes Ersatzziel oder mehrere angebotene Ersatzziele durch eine entsprechende Eingabe an der Eiingabeeinheit explizit abzulehnen. Darüber hinaus hat der Fahrzeugführer auch die Möglichkeit, aus der Liste angebotener Ersatzziele durch eine entsprechende Eingabe über die Bedieneinheit 45 ein anderes als das bevorzugte Ersatzziel auszuwählen.

Die Neubestimmung eines oder mehrerer Ersatzziele in Schritt 135, sowie gegebenenfalls 140 und 145, nach einer Ablehnung eines Ersatzziels durch beispielsweise eine fehlende oder ablehnende Eingabe des Fahrzeugführers (Schritt 155) ist erforderlich, da das Fahrzeug nach erstmaliger Ausgabe des oder der Ersatzziele möglicherweise ein oder mehrere Ersatzziele bereits passiert hat und ein Wenden des Fahrzeugs beispielsweise auf der Autobahn nicht möglich ist, so daß das oder die passierten Ersatzziele nicht vor einem weiteren in Fahrtrichtung liegenden Ersatzziel erreichbar ist oder sind.

Wird in Schritt 165 festgestellt, daß der festgestellte Mangel kein gravierender Mangel ist, also einer Weiterfahrt nicht zwingend entgegensteht, beispielsweise in einer erhöhten Streßbelastung des Fahrzeugführers, detektiert durch die Biosensoren 75, einem Bedürfnis nach Nahrungs- oder Flüssigkeitsaufnahme oder ähnlichem, beispielsweise durch den Fahrzeugführer selbst über die Eingabeeinheit 45 eingegeben, besteht, wird durch die Steuerung 20 entweder eine entsprechende Nutzereingabe zurückgesetzt oder ein den Mangel detektierender Sensor ignoriert (Schritt 170). Der Ablauf wird daraufhin mit dem beschriebenen Zielführungsvorgang gemäß Schritt 115 fortgesetzt.

Wird in Schritt 160 festgestellt, daß der Benutzer ein angebotenes Ersatzziel bestätigt oder eines aus einer Mehrzahl von Ersatzzielen ausgewählt hat, wird das durch den Fahrzeugführer vorgegebene Navigationsziel in einem nicht dargestellten Zwischenspeicher zwischengespeichert und im Arbeitsspeicher der Steuerung durch das ausgewählte oder angenommene Ersatzziel ersetzt (Schritt 180). Darauf wird eine neue Fahrtroute vom aktuellen Fahrzeugstandort zum nun gültigen Fahrziel, nämlich dem ausgewählten oder angenommenen Ersatzziel, berechnet und der Zielführungsvorgang zu diesem Ersatzziel, wie im Zusammenhang mit Schritt 115 beschrieben, fortgesetzt (Schritt 185).

Ist das Ersatzziel erreicht, erfolgt eine entsprechende Ausgabe über die Ausgabeeinheit 50 an den Fahrzeugführer (Schritt 190).

Wird nun der Fahrzeugmangel oder die Beeinträchtigung des Fahrzeugführers, beispielsweise durch Betankung des Fahrzeugs im Falle einer unterschrittenen Betriebsstoffvorratsmindestmenge als festgestelltem Mangel, behoben (Schritt 195), wird ein gegebenenfalls durch Eingabe des Fahrzeugführers festgestellter Mangel zurückgesetzt und das durch den Fahrzeugführer ursprünglich vorgegebene Fahrziel aus dem Zwischenspeicher in den Arbeitsspeicher des Navigationsgeräts geladen (Schritt 200), worauf eine Neuberechnung der Fahrtroute vom aktuellen Fahrzeugstandort, nämlich dem Ersatzziel, zum Fahrziel erfolgt und der beschriebene Zielführungsvorgang fortgesetzt wird (Schritt 115; über Sprungstelle 102).

Wird entgegen obiger Annahme, daß ein Ersatzziel mit der zur Behebung eines festgestellten Mangels notwendigen Ausstattung vorhanden ist, der Speicher 60 vergeblich nach einem solchen Zwischenziel durchsucht (Schritte 135, 140, 145), sei es, weil der Fahrzeugführer ein angebotenes Ersatzziel ignoriert hat oder den Fahranweisungen zum Ersatzziel nicht gefolgt ist und demzufolge das angebotene Ersatzziel ohne Inanspruchnahme der verfügbaren Ausstattung passiert hat, sei es, weil ein entsprechendes Ersatzziel im Aktionsradius des aktuellen Fahrzeugstandorts nicht existiert, wird gemäß einer vorteilhaften Weiterbildung der vorliegenden Erfindung über eine mit dem Navigationsgerät 10 verbundene, in der Figur nicht dargestellte Funkeinrichtung ein entsprechender Notruf an das nächstgelegene Ersatzziel gesandt, das über die zur Behebung des Mangels verfügbare Ausstattung verfügt. Beispielsweise kann bei aufgrund Treibstoffmangels liegengebliebenem Fahrzeug die nächtsgelegene Tankstelle informiert werden. Dieser Notruf kann automatisch beispielsweise bei Stillstand des Fahrzeugs infolge des nicht behobenen Mangels, oder durch den Fahrzeugführer initiiert abgesandt werden, wobei im letztgenannten Fall das Navigationsgerät dem Fahrzeugführer beispielsweise eine zugehörige Funkadresse aus dem Speicher 60 angibt.

Alternativ kann vorgesehen sein, daß nach Ignorieren eines Zwischenziels durch den Fahrzeugführer und kurz bevorstehendem Stillstand des Fahrzeugs, beispielsweise infolge Zurneigegehen des Kraftstoffvorrats unter eine Mindestresevemenge, der Fahrzeugführer auf die Möglichkeit einer Kanisterbetankung aus einem mitgeführten Reservekanister hingewiesen wird, und anschließend die nächstgelegene Tankstelle als Ersatzziel für eine weitere Zielführung zugrundegelegt wird.

## Patentansprüche

1. Verfahren zur Routenberechnung in einem Fahrzeugnavigationsgerät, bei dem eine Route von einem Start- oder aktuellen Standort zu einem Zielort berechnet wird,
wobei im Falle eines Fahrzeug- oder den Fahrzeugführer beeinträchtigenden Mangels dem Fahrzeugführer ein Ersatzzielort angeboten wird, und
wobei die Route zu dem angebotenen Ersatzzielort anstelle des Zielorts berechnet wird, sofern nicht der Fahrzeugführer den Ersatzzielort ablehnt.

2. Verfahren zur Zielführung eines Fahrzeugführers von einem Start- zu mindestens einem Zielort, wobei eine Fahrtroute von dem Start- oder einem aktuellen Standort zu dem mindestens einen Zielort bestimmt wird, und in Abhängigkeit eines aktuellen Standorts Fahrtanweisungen erzeugt werden,
wobei im Falle eines Fahrzeug- oder den Fahrzeugführer beeinträchtigenden Mangels dem Fahrzeugführer ein Ersatzzielort angeboten wird, und
wobei die Route zu dem angebotenen Ersatzzielort anstelle des Zielorts berechnet wird, sofern nicht der Fahrzeugführer den Ersatzzielort ablehnt.

3. Verfahren nach einem der vorstehenden Ansprüche, **dadurch gekennzeichnet, dass** der Ersatzzielort über die notwendige Ausstattung zur Behebung des Fahrzeugmangels oder des den Fahrzeugführer beeinträchtigenden Mangels verfügt.

4. Verfahren nach einem der vorstehenden Ansprüche, **dadurch gekennzeichnet, dass** der Ersatzzielort über vorgebbare Attribute verfügt.

5. Verfahren nach einem der vorstehenden Ansprüche, **dadurch gekennzeichnet, dass** im Falle eines Fahrzeug- oder den Fahrzeugführer beeinträchtigenden Mangels dem Fahrzeugführer mehrere Ersatzzielorte und einer dieser mehreren Ersatzzielorte als bevorzugter Ersatzzielort angeboten werden und dass die Ablehnung des bevorzugten Ersatzzielorts durch explizite Ablehnung des bevorzugten Ersatzzielorts oder durch Auswahl eines anderen als des bevorzugten Ersatzzielortes aus der Menge der angebotenen Ersatzzielorte erfolgt.

6. Verfahren nach einem der vorstehenden Ansprüche, **dadurch gekennzeichnet, dass** die Feststellung eines Fahrzeug- oder den Fahrzeugführer beeinträchtigenden Mangels durch den Fahrzeugführer erfolgt.

7. Verfahren nach einem der vorstehenden Ansprüche, **dadurch gekennzeichnet, dass** die Feststellung eines Fahrzeugmangels durch Sensoren des Fahrzeugs erfolgt.

8. Verfahren nach einem der vorhergehenden Ansprüche, **dadurch gekennzeichnet, dass** die Verfügbarkeit der zur Behebung des Fahrzeugmangels oder des den Fahrzeugführer beeinträchtigenden Mangels erforderlichen Ausstattung an einem potentiellen Ersatzzielort durch Vergleich einer aktuellen Uhrzeit mit gespeicherten Öffnungszeiten oder durch Fernabfrage überprüft wird.

9. Navigationssystem mit einer Eingabevorrichtung (45) und einer Steuerung (20) ausgebildet zur Durchführung des Verfahrens nach einem der vorhergehenden Ansprüche.

## Claims

1. Route calculation method in a vehicle navigation device in which a route is calculated from a starting location or current location to a destination,
an alternative destination being offered to the driver of the vehicle if there is a deficiency in the vehicle or a deficiency which adversely affects the driver of the vehicle, and
the route to the offered alternative destination being calculated instead of the destination if the driver of the vehicle does not reject the alternative destination.

2. Method for routing a driver of a vehicle from a starting location to at least one destination, a route being determined from the starting location or a current location to at least one destination and a travel instruction being generated as a function of a current location,
an alternative destination being offered to the driver of the vehicle if there is deficiency in the vehicle or a deficiency which adversely affects the driver of the vehicle, and
the route to the offered alternative destination being calculated instead of the destination if the driver of the vehicle does not reject the alternative destination.

3. Method according to one of the preceding claims, **characterized in that** the alternative destination has the necessary equipment for eliminating the deficiency of the vehicle or the deficiency which adversely affects the driver of the vehicle.

4. Method according to one of the preceding claims, **characterized in that** the alternative destination has predefinable attributes.

5. Method according to one of the preceding claims, **characterized in that** if there is a deficiency in the vehicle or deficiency which adversely affects the driver of the vehicle a plurality of alternative destinations are offered to the driver of the vehicle and one of these plurality of alternative destinations is offered as a preferred alternative destination, and **in that** the rejection of the preferred alternative destination is carried out by explicitly rejecting the preferred alterative destination or by selecting another of the alternative destinations than the preferred alternative destination from the set of offered alternative destinations.

6. Method according to one of the preceding claims, **characterized in that** a deficiency of the vehicle or a deficiency which adversely affects the driver of the vehicle is detected by the driver of the vehicle.

7. Method according to one of the preceding claims, **characterized in that** a deficiency of the vehicle is detected by sensors of the vehicle.

8. Method according to one of the preceding claims, **characterized in that** the availability of the equipment which is necessary to eliminate the deficiency of the vehicle or the deficiency which adversely affects the driver of the vehicle is checked at a potential alternative destination by comparing a current time or with stored opening times or by remote interrogation.

9. Navigation system having an input device (45) and a controller (20) which is designed to carry out the method according to one of the preceding claims.

## Revendications

1. Procédé de calcul d'itinéraire dans un appareil de navigation d'un véhicule, selon lequel un itinéraire est calculé depuis un point de départ ou une position jusqu'à une destination, une destination de remplacement étant proposée en cas de carence affectant le véhicule ou le conducteur du véhicule, et
l'itinéraire vers la destination de remplacement proposée étant calculé, dans la mesure où le conducteur ne la refuse pas.

2. Procédé de navigation pour un conducteur depuis un point de départ jusqu'à au moins une destination, selon lequel un itinéraire depuis le point de départ ou une position vers au moins une destination est déterminé et des consignes de conduite générées en fonction de la position,
en cas de carence affectant le véhicule ou le conducteur une destination de remplacement étant proposée au conducteur, et
l'itinéraire vers la destination de remplacement proposée étant calculé, dans la mesure où le conducteur ne refuse pas la destination de remplacement.

3. Procédé selon l'une quelconque des revendications précédentes,
**caractérisé en ce que**
la destination de remplacement dispose de l'équipement nécessaire pour remédier à la carence du véhicule ou à celle affectant le conducteur.

4. Procédé selon l'une quelconque des revendications précédentes,
**caractérisé en ce que**
la destination de remplacement dispose d'attributs que l'on peut prédéterminer.

5. Procédé selon l'une quelconque des revendications précédentes,
**caractérisé en ce qu'**
en cas de carence affectant le véhicule ou le conducteur plusieurs destinations de remplacement sont proposées l'une d'elles étant la destination de remplacement préférée, et le refus de celle-ci s'effectue par un refus explicite ou par la sélection d'une destination de remplacement différente parmi les destinations de remplacement proposées.

6. Procédé selon l'une quelconque des revendications précédentes,
**caractérisé en ce qu'**
une carence affectant le véhicule ou le conducteur est détectée par ce dernier.

7. Procédé selon l'une quelconque des revendications précédentes,
**caractérisé en ce que**
la carence du véhicule est détectée par des capteurs.

8. Procédé selon l'une quelconque des revendications précédentes,
**caractérisé en ce que**
la disponibilité de l'équipement nécessaire pour remédier à la carence du véhicule ou à celle du conducteur est vérifiée au niveau d'une destination de remplacement potentielle par comparaison d'une heure avec des heures d'ouverture enregistrées ou par interrogation à distance.

9. Système de navigation comprenant un dispositif de saisie (45) et une commande (20), conçu pour la mise en oeuvre du procédé selon l'une quelconque des revendications précédentes.
